# EUROPEAN PATENT APPLICATION

(11) **EP 4 304 183 A1**
(43) Date of publication of application: **10.01.2024**
(21) Application number: 23183952.3
(22) Date of filing: 06.07.2023
(51) Int. Cl.: H04N 21/2187, G06V 20/40, H04N 21/234, H04N 21/44

(54) **APPARATUS FOR DETECTING SERVICE-ABUSING USER AND METHOD THEREOF**

(30) Priority: 08.07.2022 KR 20220084379; 04.05.2023 KR 20230058397
(71) Applicant: Hyperconnect LLC, Seoul 06164 (KR)
(72) Inventor: CHOI, Seung Woo, 06164 Seoul (KR); BYUN, Hyeong Min, 06164 Seoul (KR); PARK, Chan Ok, 06164 Seoul (KR); KIM, Hyung Ryul, 06164 Seoul (KR); RYOU, Il Hwan, 06164 Seoul (KR)
(74) Representative: Zimmermann & Partner Patentanwälte mbB

(57) **Abstract**

Disclosed is a method for detecting abusing video information in an electronic device, the method including obtaining (301) first information associated with a user participating in a broadcast and second information associated with a content of the broadcast, determining (302), based on the second information and a first list of one or more types of abuse, third information about whether the second information corresponds to one of the one or more types of abuse, providing (303), based on the third information, a service server (101) involved in provision of the broadcast with the first information, the second information and the third information, and providing (304), based on the third information, a verification server (103) associated with user sanctions with the first information and the second information.

## Description

### CROSS-REFERENCE TO RELATED APPLICATION(S)

This application claims the benefit of Korean Patent Application No. 10-2022-0084379, filed on July 8, 2022, and Korean Patent Application No. 10-2023-0058397, filed on May 4, 2023, in the Korean Intellectual Property Office, the disclosures of which are incorporated herein in their entireties by reference.

### BACKGROUND

### 1. Field of the Invention

This disclosure relates to an electronic device for detecting service-abusing video information and a method thereof.

### 2. Description of the Related Art

With the development of electronic technology, Internet broadcasts are becoming more common. As the number of streamers (hosts) providing Internet broadcasts increases and the topics covered in Internet broadcasts diversify, the number of users watching Internet broadcasts continues to increase.

In recent years, as the demand for closer interaction between the host and the viewers (guests) of the host's Internet broadcast has increased, so-called guest participation broadcasts are emerging, in which content (video, image, audio, text, etc.) sent by some of the guests watching the host's Internet broadcast is broadcast as part of the content included in the Internet broadcast.

Under these circumstances, the amount of content (video, image, audio, text, etc.) exposed to viewers in Internet broadcasts is rapidly increasing, and the number of so-called abuses that expose inappropriate content to viewers using Internet broadcasts is also increasing.

There is a need to propose measures to effectively detect the abuse of Internet broadcast services by detecting the exposure of inappropriate content to viewers and users (hosts/guest) who are the subject of such abuse, block the exposure of inappropriate content, and apply appropriate sanctions to the users from which the inappropriate content originates.

### SUMMARY

Many embodiments of the invention provide a solution for detecting, blocking and/or otherwise managing inappropriate broadcast content. Specifically, some embodiments of the invention provide for the automated detection of abusive content from a user of a broadcast, and/or the automated determination of whether that user should be subject to sanctions. Corresponding information may be shared within the system, such as but not limited to other servers. Further actions may be performed, for example by the other servers, to prevent the exposure of other users to the inappropriate content. Such actions may include, for example but not by way of limitation, blocking the inappropriate content from being broadcast onto other user devices and/or sanctioning the abusive user.

The technical aspects of the present disclosure are not limited to those mentioned above, and other aspects that are not mentioned will be clearly understood by those skilled in the art to which the present disclosure pertains from the following description.

An aspect of the invention provides a method of obtaining, from a service server, first information associated with a guest of a broadcast in which streaming is in progress and second information associated with a content received from the guest, determining, based on the second information and a first list of one or more types of abuse, third information about whether the second information corresponds to one of the one or more types of abuse, providing, based on the third information, the service server with the first information, the second information and the third information, and providing, based on the third information, a verification server with the first information and the second information. Another embodiment of the invention provides a device using such method.

According to an aspect, there is provided a computer-implemented method, by an electronic device, for detecting abusing video information, the electronic device comprising a communication part, a storage containing an application for detecting abusing video information; and a processor connected to the communication part and the storage, the method comprising: obtaining, by the communication part from a service server involved in provision of a broadcast, first information associated with a user participating in the broadcast and second information associated with a content of the broadcast; determining, by the processor, based on the second information and a first list of one or more types of abuse, third information about whether the second information corresponds to one of the one or more types of abuse; based on the third information, providing, by the communication part to the service server, the second information and the third information; and based on the third information, providing, by the communication part to a verification server involved in determining whether a reported abuse is subject to sanctions, the first information and the second information. The electronic device may be a report server. The computer-implemented method may be understood as a computer-implemented method for detecting abusing video information by the electronic device.

The method may further include, by the service server, receiving content information (such as video, images and/or text) from a host terminal to create a broadcast, receiving content information (such as video, images and/or text) from a user terminal, including part or whole of the content information received from the user terminal into the broadcast, and providing the broadcast (Internet broadcast service) to viewers' terminals. Thus, a broadcast created based on content provided by the host may include content provided by a user. The broadcast including content from the host and the user may be broadcasted to viewers' terminals.

The first information may be associated with the user who provides the content to be included in the content of the host. The second information may be associated with the content of the user transmitted from the user terminal to the service server. The second information may change depending on the content provided by the user terminal. Thus, the second information may not be considered to be static but may change during broadcasting.

The first information and the second information may be provided by the service server. The first information and the second information provided by the service server may be obtained by a report server which communicates with the service server. The first information may contain information which relates to the user as such including account information and personal information. The first information may further include report data relating to the user. The second information associated with a content of the broadcast may contain at least some of image information, video information, audio information, and text information.

The first list of one or more types of abuse may be a predefined list of given types of abuses, wherein types of abuses may relate to different types of inacceptable social behavior of a user which are intended to be sanctioned by the method described herein.

The third information may be determined by the report server, for example using a pre-trained machine learning model or an artificial intelligence model which may have been trained using a set of second information which is labelled as corresponding to any one of the types of abuses contained in the predefined list.

In an example embodiment, the second information may include at least some of video information and text information received from the user.

In an example embodiment, the second information may include image information corresponding to a frame obtained by sampling the video information based on a specified first cycle.

In an example embodiment, the third information may include type information about the one or more types of abuse, and at least some of information about whether the second information is subject to blocking corresponding to the type information and information about whether the second information is subject to reporting corresponding to the type information.

In an example embodiment, providing the service server with the first information, the second information and the third information may include providing, based on the information about whether the second information is subject to blocking, the service server with the first information, the second information and the third information, and providing the verification server with the first information and the second information may include providing, based on the information about whether the second information is subject to reporting, the verification server with the second information.

In an example embodiment, the first list may include a first threshold for determining whether information is subject to blocking corresponding to the type information and a second threshold for determining whether information is subject to reporting corresponding to the type information, and determining the third information may include determining, based on the first threshold, whether the second information is subject to blocking, and determining, based on the second threshold, whether the second information is subject to reporting.

In an example embodiment, the first list may include type information regarding the one or more types of abuse and threshold information corresponding to each of the one or more types of abuse, and determining the third information may include determining, based on the second information and the threshold information, the third information.

In an example embodiment, at least some of the content corresponding to a user identified based on the first information may be blocked based on the second information and the third information.

In an example embodiment, information about whether the second information is subject to sanctions corresponding to any one of the types of abuse in the second list of the one or more types of abuse may be determined based on the second information and the second list, and the information about whether the second information is subject to sanctions may be provided to the service server.

In an example embodiment, the first list may include at least some of the type information about the one or more types of abuse corresponding to the second list, and a threshold corresponding to the type information included in the first list and a threshold corresponding to the type information included in the second list may be different from each other.

In an example embodiment, providing the service server with the first information, the second information and the third information may include providing an intermediary server that mediates data between the electronic device and the service server with the first information, the second information and the third information.

According to another aspect, there is also provided a computer-implemented method, by an electronic device, for detecting abusing video information, the electronic device comprising a communication part, a storage containing an application for detecting abusing video information; and a processor connected to the communication part and the storage, the method including obtaining, by the communication part from a service server involved in provision of a broadcast, first information associated with a user participating in the broadcast and second information associated with a content of the broadcast, determining, by the processor, based on the second information and a first list of one or more types of abuse, third information about whether the second information corresponds to one of the one or more types of abuse, and based on the third information, providing, by the communication part to the service server, the second information and the third information. The service server may block, based on the second information and the third information, at least some of content corresponding to a guest identified based on the first information in the service server, and provide, based on the third information, a verification server involved in determining whether a reported abuse is subject to sanctions with the first information and the second information. This method can additionally include all aspect disclosed herein.

According to yet another aspect, there is also provided an electronic device for detecting abusing video information including a communication part, a storage, and a processor. The processor may be configured to obtain, from a service server involved in provision of a broadcast, first information associated with a user participating in the broadcast and second information associated with a content of the broadcast; determine, based on the second information and a first list of one or more types of abuse, third information about whether the second information corresponds to one of the one or more types of abuse; based on the third information, provide, to the service server, the second information and the third information, and provide, based on the third information, a verification server associated with user sanctions with the first information and the second information.

According to still another aspect, there is also provided a computer-implemented method of an electronic device for providing information, the information providing method including obtaining, from a service server involved in provision of a broadcast, first information associated with a user participating in the broadcast and second information associated with a content of the broadcast, displaying, based on the second information, the content of the broadcast on at least a partial region of a first page for providing the broadcast, identifying a blocking request for at least some of the content of the broadcast, identifying a user corresponding to the first information included in the blocking request, blocking at least some of the content corresponding to the identified user among the content of the broadcast, and providing, in response to the blocking, a user interface on the first page for requesting a report or sanctions against the user corresponding to the first information. The blocking request may be generated based on the second information and third information about whether the second information corresponds to one of the one or more types of abuse, and the first information, the second information and the third information may be provided to the service server based on the third information determined based on a first list of one or more types of abuse and the second information. This method can additionally include all aspect disclosed herein.

In an example embodiment, it is determined, based on the second information and a second list of one or more types of abuse, whether the second information is subject to sanctions corresponding to any one of the types of abuse in the second list, and the information providing method may further include unblocking the at least some of the content that is blocked or performing a sanctioning procedure against the user, based on whether the second information is subject to the sanctions.

According to yet another aspect, there is also provided a system for detecting abusing video information, the system including a service server configured to provide a broadcast service, a verification server involved in determining whether a reported abuse is subject to sanctions, and an electronic device. The electronic device may be configured to obtain from the service server first information associated with a user participating in a broadcast in which streaming is in progress and second information associated with a content received from the user; determine, based on the second information and a first list of one or more types of abuse, third information about whether the second information corresponds to one of the one or more types of abuse; based on the third information, provide, to the service server, the second information and the third information; and based on the third information, provide, to the verification server the first information and the second information. The electronic device may be a report server.

According to the present disclosure, a report server and a method for detecting abusing video information may immediately sanction abusing of Internet broadcasts by preventing excessive computation or excessive latency from occurring.

According to an example embodiment of the present disclosure, the strong coupling structure between the service server and the report server may be relaxed by utilizing an intermediary server.

According to an example embodiment of the present disclosure, by setting different thresholds for different types of abuse, it is possible to adaptively sanction abusing users based on the type of abuse.

According to an example embodiment of the present disclosure, by setting different thresholds for whether inappropriate content is subject to blocking exposure and whether information is subject to reporting for sanctioning against the corresponding user, it is possible to effectively perform a response of blocking content that requires an immediate action and a response of sanctioning a user that requires an accurate judgment.

The present disclosure allows actions such as providing a broadcast, identifying abuse, and determining whether to sanction the abusive user to be performed on different servers or devices, thereby increasing the accuracy of performance and reducing the burden of processing compared to the case where a single entity performs all of the actions.

The effects of the present disclosure are not limited to the effects mentioned above, and other effects not mentioned will be clearly understood by those skilled in the art from the following description.

### BRIEF DESCRIPTION OF THE DRAWINGS

These and/or other aspects, features, and advantages of the disclosure will become apparent and more readily appreciated from the following description of example embodiments, taken in conjunction with the accompanying drawings of which:
FIG. 1 is a schematic diagram illustrating a system for detecting abusing video information according to various example embodiments;
FIG. 2 is an exemplary diagram of a configuration of a service server, a report server, and a verification server for detecting abusing video information according to various example embodiments;
FIG. 3 is an operational flowchart of an information detection method of a report server in a system for detecting abusing video information according to various example embodiments;
FIG. 4 is an operational flowchart of an information-providing method of a report server depending on whether information is subject to blocking or reporting according to an example embodiment;
FIG. 5 is a diagram exemplarily illustrating a first architecture of a system for detecting abusing video information according to an example embodiment;
FIG. 6 is a diagram exemplarily illustrating a second architecture of a system for detecting abusing video information according to an example embodiment;
FIG. 7 is a diagram exemplarily illustrating a third architecture of a system for detecting abusing video information according to an example embodiment;
FIG. 8 is a diagram exemplarily illustrating a fourth architecture of a system for detecting abusing video information according to an example embodiment; and
FIGS. 9A, 9B, and 9C are diagrams illustrating pages for providing a broadcast according to an example embodiment.

### DETAILED DESCRIPTION

The following example embodiments are combinations of components and features of various example embodiments in predetermined forms. Each component or feature may be considered as optional unless explicitly stated otherwise. Each component or feature may be implemented in a form that is not combined with other components or features. In addition, various example embodiments may be configured by combining some components and features. The order of operations described in various example embodiments may be changed. Some configurations or features of one example embodiment may be included in other example embodiments, or may be replaced with corresponding configurations or features of other example embodiments.

In describing the drawings, descriptions of procedures or operations that may obscure the gist of various example embodiments are not described, and procedures or operations that are understandable at the level of those skilled in the art are not described either.

Throughout the specification, when it is stated that a part "comprises" or "includes" a certain component, it means that other components may further be included, and it does not preclude other components, unless otherwise stated. In addition, terms such as "...part", "...unit", "... module", and the like described in the specification mean a unit for performing at least one function or operation, which may be implemented as hardware or software, or as a combination of hardware and software. In addition, "a", "an", "one", "the" and similar related terms are used herein in a sense encompassing both the singular and the plural in the context of describing various example embodiments (especially in the context of the following claims) unless otherwise indicated or clearly contradicted by context.

Hereinafter, preferred implementations according to various example embodiments will be described in detail with reference to the accompanying drawings. The detailed description to be disclosed below with the accompanying drawings is intended to describe exemplary implementations of various example embodiments, and is not intended to represent the only implementation.

In addition, specific terms used in various example embodiments are provided to aid understanding of various example embodiments, and the use of these specific terms may be changed in other forms without departing from the technical spirit of the various example embodiments.

It will be understood that each block of the flowcharts and/or block diagrams, and combinations of blocks in the flowcharts and/or block diagrams, can be implemented by computer program instructions. These computer program instructions may be provided to a processor of a general-purpose computer, special purpose computer, or other programmable data processing device, such that the instructions which are executed via the processor of the computer or other programmable data processing device create means for implementing the functions/acts specified in the flowcharts and/or block diagrams. These computer program instructions may also be stored in a non-transitory computer-readable memory that can direct a computer or other programmable data processing device to function in a particular manner, such that the instructions stored in the non-transitory computer-readable memory produce articles of manufacture embedding instruction means which implement the function/act specified in the flowcharts and/or block diagrams. The computer program instructions may also be loaded onto a computer or other programmable data processing device to cause a series of operational steps to be performed on the computer or other programmable device to produce a computer implemented process such that the instructions which are executed on the computer or other programmable device provide steps for implementing the functions/acts specified in the flowcharts and/or block diagrams.

Furthermore, the respective blocks may illustrate parts of modules, segments, or codes including at least one or more executable instructions for performing specific logic function(s). Moreover, it should be noted that the functions of the blocks may be performed in a different order in several modifications. For example, two successive blocks may be performed substantially in parallel, or may be performed in reverse order according to their functions.

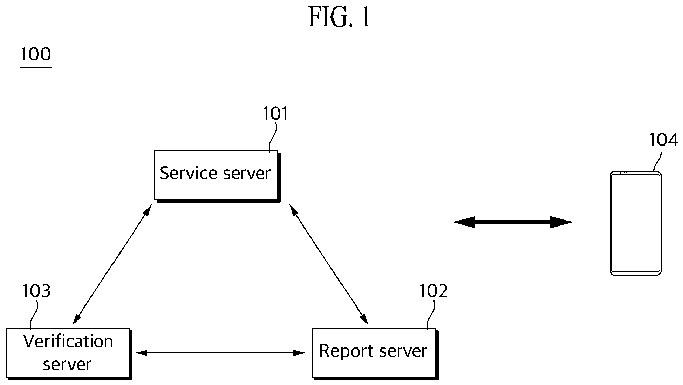

FIG. 1 is a schematic diagram illustrating a system for detecting abusing video information according to various example embodiments.

According to various example embodiments, an abusing video information detection system 100 may include a service server 101, a report server 102, and a verification server 103. The abusing video information detection system 100 according to an example embodiment may further include a network that supports data transmission and reception between at least some of the service server 101, the report server 102, the verification server 103, and an external device 104.

The abusing video information detection system 100 according to an example embodiment may further include one or more databases. The abusing video information detection system 100 according to example embodiments may further include a data bus that provides a data travel path for sending and receiving information between servers.

According to an example embodiment, the abusing video information detection system may include a user terminal 104. The user terminal 104 may include a terminal device used by a user (e.g., host, guest, and/or viewer) of the Internet broadcast service provided by the service server 101. The user terminal 104 may transmit and receive data using wired or wireless communications with at least some of the service server 101, the report server 102, and the verification server 103.

Throughout example embodiments, the service server 101, the report server 102, the verification server 103, and the user terminal 104 are referred to as separate devices and servers, but they may be logically divided structures and implemented by separate functions on one device or server. For example, the verification server 103 may include the report server 102 or may be combined with the report server 102 to form a single entity. However, even in this case, the method for detecting abusing video information performed by sending and receiving data between the report server 102 and the verification server 103 may be performed similarly. In the case of a device that includes the report server 102 or is integrally configured in combination with the report server 102, communication of the report server 102 may be understood as the process of sending and receiving data within the device to and from its components (e.g., to and from the processor of the device). According to an example embodiment, the user terminal 104 may include at least some of the components and/or features of the report server 102. The user terminal 104 may include the report server 102, or may be combined with the report server 102 to form a single entity. In this case, each action of the report server 102 can be understood as an action performed by the user terminal 104. Also, in this case, the communication between the report server 102 and the user terminal 104 can be understood as a process of sending and receiving data between the respective components within the user terminal 104.

According to an example embodiment, the service server 101, the report server 102, and the verification server 103 may include a plurality of computer systems or computer software implemented as network servers. For example, at least some of the service server 101, the report server 102, and the verification server 103 may refer to computer systems and computer software associated with subordinate devices that are capable of communicating with other network servers over a computer network, such as an intranet or the Internet, to receive requests to perform tasks, perform the tasks, and provide results of the performance. In addition, at least some of the service server 101, the report server 102, and the verification server 103 may be understood in a broader sense to include a series of applications that may operate on the network server(s), and various databases built therein. For example, at least some of the service server 101, the report server 102, and the verification server 103 may be implemented using network server programs that are available in a variety of operating systems, such as DOS, Windows, Linux, UNIX, or MacOS.

Hereinafter, for ease of description, the service server 101, the report server 102, and the verification server 103 are referred to as "servers," but these should be understood as comprehensive types of electronic devices that correspond to, include, or are included in one or more of various types of devices, such as computer devices and mobile communication terminals. For example, the report server 102 may be understood as a terminal 104 of a user (e.g., a host, guest, or viewer of a broadcast) who may perform actions corresponding to the report server 102 of the present disclosure. The user terminal 104 may include at least some of the configurations and/or features of the report server 102, and instructions for one or more actions performed by the report server 102 may be stored on the user terminal 104 in an on-device form, or the report server 102 may be embedded in the user terminal 104. The user terminal 104 may include various types of devices that may be used by an individual, such as a smartphone, PC, tablet PC, or PDA. The report server 102 may be embodied by computer instructions which, when executed by the user terminal 104, performs some or all actions corresponding to the report server 102 of the present disclosure. Furthermore, the report server 102 may also alternatively or partially be embodied by computer instructions which, when executed by the electronic device mentioned herein, performs some or all actions corresponding to the report server 102 of the present disclosure. According to an embodiment, the report server 102 is embodied by the electronic device which is different to the user terminal 104.

The service server 101 is a device for executing logic, such as computer instructions, related to live streaming, and may process various events related to providing the broadcast service, such as broadcast start, broadcast end, viewer entry, viewer exit, etc. In addition, the service server 101 may receive a broadcast start input from a host of a broadcast related to the service provision and process information to provide an Internet broadcast service in response thereto.

The service server 101 may receive content information (video, image, and/or text information) related to a broadcast in real time from a device (e.g., user terminal 104) of a host to provide an Internet broadcast service, and may transmit the broadcast by delivering the content information to a device (e.g., user terminal 104) of a user (viewer) corresponding to the broadcast hosted by the host. The service server 101 may transmit the broadcast to one or more user terminals 104 of respective users (viewers). In this case, the content information received from the host and the content information transmitted in response (to any device or user terminal) may not necessarily be identical, and the service server 101 may partially process or alter the content information received from the host and transmit it to the viewer's device. Further, the service server 101 may receive content information (e.g., video, images, and/or text) from devices (user terminals) of at least some of the viewers (e.g., guests) participating in the broadcast organized by the host, and may include the content information received from the guests as at least part of the content of the broadcast organized by the host and deliver it to the (all or other) viewers' devices.

The service server 101 may provide information about the Internet broadcast being streamed to the report server 102. The service server 101 may provide the report server 102 with first information associated with users participating in the broadcast being streamed, and second information associated with the content of the broadcast. The provision of such information may be performed repeatedly (which may mean, but is not limited to, periodic provision).

The user terminal 104 may display the content associated with the broadcast being streamed. The user terminal 104 may receive the first information and the second information from the service server 101. Based on the second information, the user device 104 may display the content corresponding to at least some of the second information.

The report server 102 is a device for executing logic related to detecting an abuse of the Internet broadcast service in a broadcast being streamed and identifying a user (host or guest) committing the abuse, which may provide the service server 101 and/or the verification server 103 with information regarding whether the content information provided by the host or guest constitutes the abuse, and/or the content information corresponding to the abuse.

The report server 102 may repeatedly receive the first information and the second information from the service server 101. More specifically, the report server 102 may repeatedly receive the second information from the service server 101 while the streaming is in progress. At this time, the first information may not necessarily be received repeatedly. For example, the report server 102 may receive the first information together with the second information at the time the second information begins to be received, and thereafter receive only the second information repeatedly until the end of the stream. Alternatively, the report server 102 may repeatedly receive the first information along with the second information each time it repeatedly receives the second information.

Based on the second information, the report server 102 may determine whether the second information corresponds to a type of abuse. The report server 102 may determine third information regarding whether the second information corresponds to a type of abuse. The report server 102 may report the abusing act and/or the abusing user (host or guest) corresponding to the abuse type to the service server 101 and/or the verification server 103. In this case, the abusing act may refer to the act of providing the content by the user, if the content provided by the user falls under the abuse type. Based on the third information, the report server 102 may provide the service server 101 and/or the verification server 103 with the second information corresponding to the content corresponding to the abusing act, and/or the information of the user (host or guest) corresponding to the abusing act.

The verification server 103 is a device for executing logic to determine, during a streaming broadcast, whether a user corresponding to the broadcast is subject to sanctions, and the verification server 103 may determine whether the user is subject to sanctions based on reported user information and information regarding the abusing act of the user. A report of abuse may be made by a user (host, guest, or viewer) associated with a broadcast being streamed. A report of abuse may be made by a user directly performing an abuse report. For example, a report of abuse may be made by the service server 101 receiving the report information from the user and providing the verification server 103 with the user information that is the subject of the report, and the content information corresponding to the report. Alternatively, a report of abuse may be performed automatically by the report server 102 itself. The report server 102 may report the abuse to the verification server 103 by providing the report server 102 with user information identified as an abusing user of the Internet broadcast and/or content information regarding the abusing act. Alternatively, a report of abuse may be performed by the service server 101 by forwarding the user information and/or content information related to the abuse, which were provided from the report server 102 to the service server 101, to the report server 102.

The verification server 103 may determine whether the reported abuse is subject to sanctions. The verification server 103 may determine whether the reported content information corresponds to a type of abuse. In this case, the verification server 103 may verify whether the content information corresponds to the type of abuse independently of the report server 102. Specifically, the verification server 103 may verify whether the content information received from the report server 102 corresponds to the type of abuse based solely on the content information received from the report server 102, regardless of whether the report server 102 makes a judgment. In other words, the verification server 103 may verify whether the content information corresponds to the type of abuse based on a condition or threshold that is different from the condition or threshold for verifying whether the content information corresponds to the condition that is the basis for the judgment of abuse of the report server 102. If the reported content corresponds to the type of abuse, the verification server 103 may determine that the user corresponding to the abusing content is a user subject to sanctions, and may provide the service server 101 with information regarding whether the user is subject to sanctions.

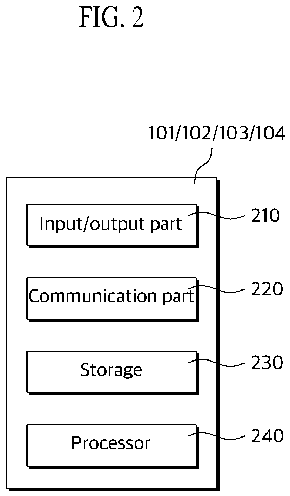

FIG. 2 is an exemplary diagram of a configuration of a service server 101, a report server 102, a verification server 103, and/or a user terminal 104 for detecting abusing video information according to various example embodiments.

Referring to FIG. 2, the service server 101, the report server 102, the verification server 103, and/or the user terminal 104 may include an input/output part 210, a communication part 220, a storage 230, and a processor 240.

The input/output part 210 may include various interfaces or connection ports that receive a user input, or output information to a user. The input/output part 210 may include an input module and an output module, and the input module receives the user input from the user. The user input may be made in various forms, including a key input, touch input, and voice input. Examples of the input module that can receive such user inputs include a traditional keypad, a keyboard, and a mouse, as well as a touch sensor that detects a user's touch, a microphone that receives a voice signal, a camera that recognizes gestures through image recognition, proximity sensors including at least one of an illuminance sensor or an infrared sensor that detects a user approach, a motion sensor that recognizes a user motion through an acceleration sensor or a gyro sensor, and other input means of various types that detect or receive a user input of various other types, and the input module according to the example embodiment of the present disclosure may include at least one of the devices listed above. Here, the touch sensor may be implemented as a piezoelectric or capacitive touch sensor that senses a touch through a touch panel or a touch film attached to a display panel, an optical touch sensor that senses a touch by an optical method, or the like. In addition, the input module may be implemented in the form of an input interface (USB port, PS/2 port, etc.) that connects an external input device that receives a user input instead of a device that detects a user input by itself. Also, the output module can output various types of information. The output module may include at least one of a display that outputs an image, a speaker that outputs sound, a haptic device that generates vibration, and other various types of output means. In addition, the output module may be implemented in the form of a port-type output interface for connecting the individual output means described above.

As an example, the output module in the form of a display may display text, still images, and moving pictures. The display may include at least one of a liquid crystal display (LCD), a light emitting diode (LED) display, an organic light emitting diode (OLED) display, a flat panel display (FPD), a transparent display, a curved display, a flexible display, a 3D display, a holographic display, a projector, and other various types of devices that can perform image output functions. Such a display may be in the form of a touch display integrated with the touch sensor of the input module.

The communication part 220 may communicate with other devices. Accordingly, the service server 101, the report server 102, the verification server 103, and the user terminal 104 may transmit and receive information to and from other devices through the communication part. For example, the service server 101, the report server 102, the verification server 103, and the user terminal 104 may communicate with each other using the communication part or may communicate with other devices.

Here, communication, that is, data transmission/reception may be performed by wire or wirelessly. To this end, the communication part may be configured with a wired communication module, a mobile communication module that connects to a mobile communication network through a mobile communication base station to transmit and receive data, a short-range communication module that uses a wireless local area network (WLAN) communication method such as Wi-Fi or a wireless personal area network (WPAN) communication method such as Bluetooth and Zigbee, a satellite communication module using Global Navigation Satellite System (GNSS) such as Global Positioning System (GPS), or a combination thereof.

The storage 230 may store various types of information. The storage can store data temporarily or semi-permanently. For example, in the storage, an operating system (OS) for driving the service server 101, the report server 102, the verification server 103, and/or the user terminal 104, data for hosting a website, a program for generating braille, data about the application (for example, web application), and so on may be stored. In addition, the storage may store modules in the form of computer codes as described above.

Examples of the storage 230 include a hard disk drive (HDD), a solid state drive (SSD), a flash memory, a read-only memory (ROM), a random access memory (RAM), and so on. Such a storage may be provided as a built-in type or a detachable type.

The processor 240 controls the overall operation of the service server 101, the report server 102, the verification server 103, and/or the user terminal 104. To this end, the processor 240 may perform calculations and processing of various types of information and control operations of components of the service server 101, the report server 102, the verification server 103, and/or the user terminal 104. For example, the processor 240 may execute a program or an application for detecting abusing video information. The processor 240 may be implemented as a computer or a similar device according to hardware, software, or a combination thereof. In hardware, the processor 240 may be implemented in the form of an electronic circuit that performs a control function by processing an electrical signal, and in software, it may be implemented in the form of a program that drives the hardware processor 240. On the other hand, in the following description, if there is no special mention, the operation of the service server 101, the report server 102, the verification server 103, and/or the user terminal 104 may be interpreted as being performed under the control of the processor 240. That is, when the modules implemented in the above-described abusing video information detection system 100 are executed, the modules may be interpreted as controlling the processor 240 to cause the service server 101, the report server 102, the verification server 103, and/or the user terminal 104 to perform the following operations.

In summary, various example embodiments can be implemented through various means. For example, various example embodiments may be implemented by hardware, firmware, software, or a combination thereof.

In the case of hardware implementation, methods according to various example embodiments can be implemented by one or more of application specific integrated circuits (ASICs), digital signal processors (DSPs), digital signal processing devices (DSPDs), programmable logic devices (PLDs), and field programmable gate arrays (FPGAs), processors, controllers, microcontrollers, microprocessors, and the like.

In the case of implementation by firmware or software, the method according to various example embodiments may be implemented in the form of a module, a procedure, or a function that performs features or operations described below. For example, the software code may be stored in a memory and driven by the processor. The memory may be located inside or outside the processor, and may exchange data with the processor through various known means.

Hereinafter, various example embodiments will be described in more detail based on the above technical idea. For various example embodiments described below, the above-described contents may be applied. For example, operations, functions, terms, or the like that are not defined in various example embodiments described below may be performed and described based on the above-described contents.

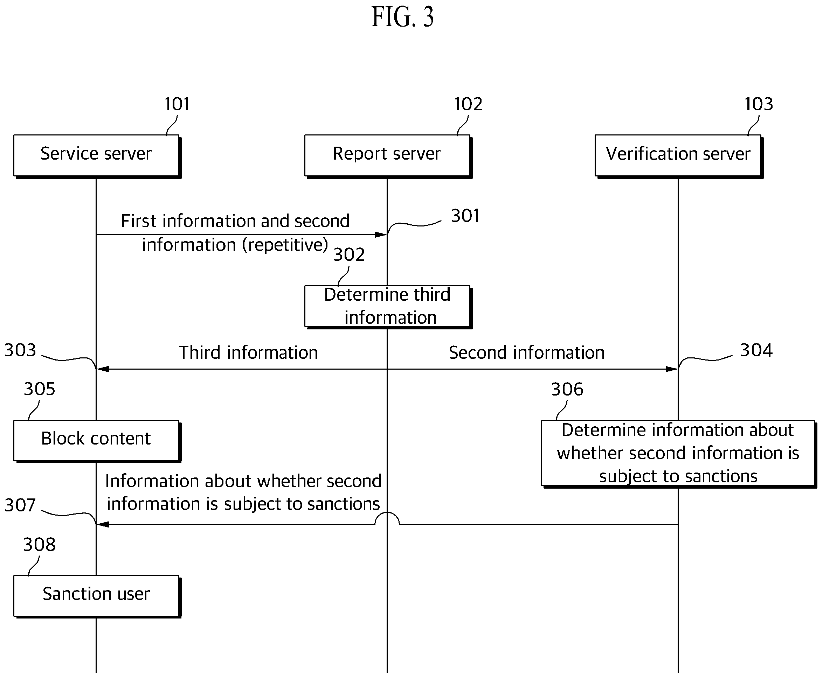

FIG. 3 is an operational flowchart of an information detection method of a report server in a system for detecting abusing video information according to various example embodiments.

Referring to FIG. 3, a report server 102 according to an example embodiment may obtain first information associated with a user of the broadcast being streamed and second information associated with a content of the broadcast being streamed from a service server 101 (operation 301). The first information may be information about a host or guest of the broadcast being streamed. Specifically, the first information may include information about a user who provides the service server 101 with the content corresponding to the second information described below. The report server 102 may repeatedly receive the first information and the second information from the service server 101. The report server 102 may obtain information associated with the user and information associated with the content. In this case, the first information may include at least some of the information associated with the user and the second information may include at least some of the information associated with the content. According an embodiment, both the first information and the second information may be obtained repeatedly, but the present disclosure is not limited thereto. For instance, according to another embodiment, only the second information may be obtained repeatedly. The first information and the second information may be obtained repeatedly, including in both periodic and non-periodic ways.

The first information may include at least some of identification information of the user, account information of the user, and biographical information of the user (e.g., gender of the user and country code corresponding to the user). In an example embodiment, the first information may also include at least one of the language(s) used by the user, an operating system of the user terminal 104, a means by which the user subscribed to the service, and a date when the user subscribed to the service. In certain example embodiments, the first information may further include report data. The report data corresponds to the details of a report of misconduct (including various acts such as prohibited acts and illegal acts in the context of service provision), and may include at least one of identification information of the reporter, identification information of the reported person, a type of reporter (such as a user terminal of a viewer, guest or host, a report server, etc.), a type of reported person, a time of the report, and whether the report was followed with sanctions.

In addition, the first information may include a variety of content, including but not limited to the elements described above.

The second information may include content information associated with the broadcast. The content information associated with the broadcast may include at least some of image information, video information, audio information, and text information. The image information may include various types of images, such as at least some of thumbnail information set by a host, screen captures of a broadcast by a host, screen captures of a video in which a guest participated in as part of the broadcast, and screen captures of comments made by a user (viewer, guest, or host). According to an example embodiment, when the streaming is in progress, the service server 101 may generate image information captured (sampled) from the video being streamed by the host or the video being streamed by the guest, as the second information, and provide it to the report server 102, periodically according to a specified cycle or aperiodically. If the second information includes image information, the second information may include frame images sampled by the service server 101 based on a specified cycle from the video information received from a user (e.g., a host or a guest) participating in the broadcast (i.e., the video information streamed by the host or the guest as part of the broadcast content). In this case, the service server 101 may repeatedly sample the video information of the guest in a specified cycle or aperiodically while the host or guest is streaming the video. The text information may include at least some data regarding text (e.g., comments) written by the user. According to an example embodiment, the service server 101 may provide the report server 102 with the text information written by a user (host, guest, or viewer) corresponding to the broadcast being streamed as the second information on an ongoing basis, or whenever the user-written text information is generated.

According to an example embodiment, the user terminal 104 may receive the first information and the second information from the service server 101, and may display at least some of the content regarding the broadcast based on the second information.

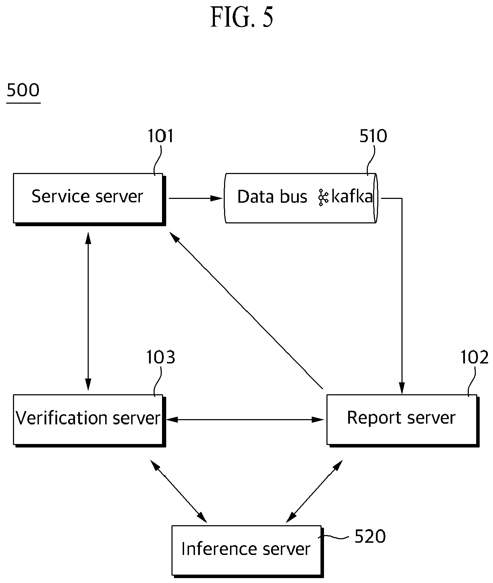

According to an example embodiment, at least some of the first information and the second information may be obtained via a data bus, as will be described in detail with reference to FIGS. 5, 6, 7, and 8.

The report server 102 may determine the third information (operation 302). The report server 102 may determine the third information based on the second information and a first list of one or more types of abuse. The first list may include information about one or more types of abuse. The first list may include type information categorizing the various types of abuse and information about thresholds for determining whether an act corresponds to each type of abuse. The types of abuse may include various types of abuse, such as but not limited to the inclusion of images of underage children in content associated with the broadcast, the inclusion of images or text containing sexual elements (e.g., genital exposure) in content associated with the broadcast, and the inclusion of images or text containing violence in content associated with the broadcast. The threshold for determining whether to correspond to a type of abuse may have different values corresponding to different types of abuse. The report server 102 may determine whether the second information corresponds to a type of abuse based on the threshold.

According to an example embodiment, the threshold corresponding to each type of abuse may include a plurality of values. For example, when the second information relates to the content that requires blocking against broadcast transmission, the "threshold" for determining whether it corresponds to a type of abuse may include a first threshold for determining whether the content corresponding to the second information is subject to blocking, and a second threshold for determining whether the user (host or guest) who provided the content corresponding to the second information is subject to sanctions. In this case, the report server 102 performs a reporting by providing the second information to the verification server 103 to check whether the second information is subject to sanctions, so the second threshold may be understood as a threshold for checking whether the second information is subject to the reporting. The first threshold and second threshold corresponding to each type of abuse may be set to different values for each type of abuse.

The report server 102 may determine the third information regarding whether the second information corresponds to a type of abuse. The third information may include type information about the type of abuse and information about whether the second information corresponds to the type of abuse. In some example embodiments, the third information may include at least some of the first information and at least some of the second information. For example, the third information may include at least some of the information associated with a user corresponding to abuse and at least some of the information associated with a content corresponding to abuse.

According to an example embodiment, the report server 102 may determine whether the second information corresponds to a type of abuse based on an inference result of a machine learning model or an artificial intelligence model. The report server 102 may determine whether the second information corresponds to a type of abuse by providing the second information to an inference server including, for example, a machine learning model or an artificial intelligence model, and receiving inference result information from the inference server regarding whether the second information corresponds to a type of abuse. In this case, the report server 102 may provide the inference server with information regarding the threshold corresponding to each type of abuse.

The report server 102 may provide the service server 101 with the third information (operation 303). Based on the third information, the report server 102 may provide the service server 101 with the first information, the second information and the third information. If the second information corresponds to a type of abuse based on the third information, the report server 102 may provide the service server 101 with at least some of the first information associated with the user corresponding to the abusing act, at least some of the second information associated with the content corresponding to the abusing act, and the third information regarding whether the abusing act corresponds to a type of abuse.

The report server 102 may provide the verification server 103 with the second information (operation 304). Based on the third information, the report server 102 may provide the verification server 103 with the second information and at least some of the first information and the third information. If the second information corresponds to a type of abuse based on the third information, the report server 102 may provide the verification server 103 with at least some of the first information associated with the user corresponding to the abusing act, at least some of the second information associated with the content corresponding to the abusing act, and the third information regarding whether the abusing act is a type of abuse. In an example embodiment, the report server 102 may provide the verification server 103 with the first information about the abusing user and the second information about the abusing content. In an example embodiment, the report server 102 may provide the verification server 103 with only the second information.

The service server 101 may block the content in response to the third information received from the report server 102 (operation 305). The service server 101 may block at least some of the content of the broadcast being streamed based on the third information. The service server 101 may block at least some of the content information corresponding to a user (e.g., host or guest) identified based on the first information received from the report server 102. The blocking of at least some of the content may be accomplished through various methods, such as blurring or covering the image if the content is an image, to prevent the viewer from being exposed to an inappropriate image that constitutes abuse. If the content is text, blocking may be accomplished by deleting, blurring, or covering the text that constitutes an abuse.

According to an example embodiment, the user terminal 104 may block at least some of the content being displayed in response to the third information received from the report server 102 or obtained as a result of performing at least some of the operations of the report server 102 (e.g., at least some of operations 302 to 304). For example, based on the third information, the user terminal 104 may check the first information regarding the information of the abusing user, and block the display of the content corresponding to the first information. For example, the user terminal 104 may check, from the second information, information about at least some of the content corresponding to the third information or the first information about the user corresponding to the third information. The user terminal 104 may block at least some of the content of the broadcast being displayed that is identified based on the first information or at least some of the content that is identified based on the second information.

According to an example embodiment, when an image corresponding to a particular user is blocked, the service server 101 may provide other users (e.g., viewers/hosts) who are not blocked with a user interface to make a request to report or sanction that user. For example, the service server 101 may provide a viewer device with a user interface for requesting to report a user who has committed an abusing act, and may provide a host device with a user interface for requesting to report a guest or for requesting to remove the guest from the page of the broadcast being streamed. According to an example embodiment, upon receiving a request, using the user interface provided to the host device or the viewer device, from the host device or the viewer device, the service server 101 may perform a report action or a remove action in response to the request.

According to an example embodiment, the user terminal 104 may block the content corresponding to the user associated with the abuse and display a user interface for requesting to report or sanction the user corresponding to the blocked content. The user terminal 104 may provide the user interface for reporting or sanctioning, to the user in response to receiving information corresponding to the user interface for reporting or sanctioning from the service server 101. Alternatively, in response to blocking content corresponding to a particular user, the user terminal 104 may display a user interface for requesting to report or sanction the user regarding the blocked content.

Based on the second information provided by the report server 102, the verification server 103 may determine information regarding whether the second information is subject to sanctions (operation 306). The verification server 103 may determine the information regarding whether the second information is subject to sanctions based on a second list of one or more types of abuse.

The second list may include information about one or more types of abuse. The second list may include type information categorizing the various types of abuse and information about thresholds for determining whether an act corresponds to each type of abuse. The types of abuse may include various types of abuse, such as the inclusion of images of underage children in content associated with the broadcast, the inclusion of images or text containing sexual elements (e.g., genital exposure) in content associated with the broadcast, and the inclusion of images or text containing violence in content associated with the broadcast. The threshold for determining whether it corresponds to a type of abuse may have different values corresponding to different types of abuse. The verification server 103 may determine whether the second information corresponds to a type of abuse based on the threshold. Since the verification server 103 determines whether the user is subject to sanctions, the criteria for whether the user is subject to sanctions may be higher than the criteria, used by the report server 102, for whether the second information (i.e., content) is subject to reporting. The process of sanctioning a user may involve removing the targeted user from the broadcast, temporarily or permanently suspending the account, or otherwise taking legal action against the offending act, and may require prudent criteria. Therefore, the thresholds corresponding to the second list may include higher values than those in the first list, even for the same type of abuse. Accordingly, the second list may contain information about additional types of abuse that are different from or in addition to the types of abuse in the first list, or may contain more detailed information about the types of abuse in the first list.

According to an example embodiment, the verification server 103 may determine whether the second information corresponds to a type of abuse based on an inference result of a machine learning model or an artificial intelligence model. The verification server 103 may determine whether the second information corresponds to a type of abuse by providing the second information to an inference server including, for example, a machine learning model or an artificial intelligence model, and receiving inference result information from the inference server regarding whether the second information corresponds to a type of abuse. In this case, the verification server 103 may provide the inference server with information regarding the threshold corresponding to the second list.

When the second information corresponds to a type of abuse according to the second list, the verification server 103 may provide the service server 101 with information regarding whether the second information is subject to sanctions (operation 307). The verification server 103 may provide the service server 101 with the first information, at least some of the second information, and the information regarding whether the second information is subject to sanctions. The information regarding whether the second information is subject to sanctions may include information regarding a type of abuse and information regarding whether it constitutes the type of abuse.

The service server 101 may sanction the user based on the information regarding whether the second information is subject to sanctions (operation 308). Based on the information regarding whether the second information is subject to sanctions, the service server 101 may remove the subject user from the broadcast, temporarily or permanently suspend the account, and/or add information about that user to the blacklist.

The user terminal 104 may perform processing to sanction the user based on information regarding whether information is subject to sanctions. For example, the user terminal 104 of the user corresponding to sanctions may receive information from the service server 101 regarding whether information is subject to sanctions, and may disconnect from the broadcast. Alternatively, the user terminal 104 of the user subject to sanctions may receive information from the verification server 103 regarding whether information is subject to sanctions, and may perform user sanctioning processing. According to an example embodiment, based on whether information is subject to sanctions, the user terminal 104 may unblock the content. For example, content corresponding to a user who has been identified as not being sanctioned may be unblocked. According to an example embodiment, blocking of the content may be performed temporarily, and the user terminal 104 may unblock the blocked content after a specified period of time. According to an example embodiment, the user terminal 104 may check images or the like being transmitted by the blocked user even while the content is being blocked. In this case, the user terminal 104 may continuously check the first and second information and unblock the content if it no longer falls under the type of abuse.

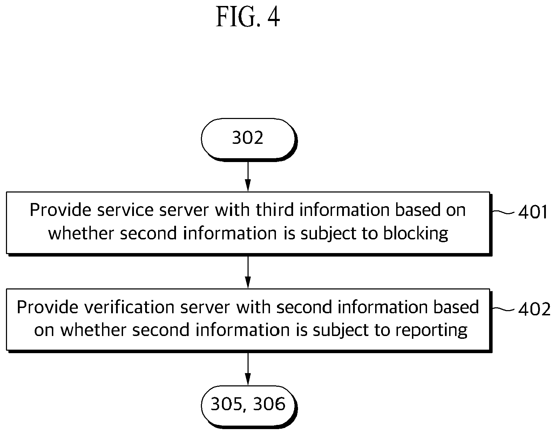

FIG. 4 is an operational flowchart of an information providing method of a report server depending on whether information is subject to blocking or reporting according to an example embodiment.

According to an example embodiment, the report server 102 may provide the service server 101 with the third information based on whether the second information is subject to blocking (operation 401). The report server 102 may determine whether the second information is subject to blocking in response to operation 302 of FIG. 3 described above. In example embodiments, each abusing act may be categorized as blockable and/or reportable.

Blocking against abuse may refer to a method of blocking an abusing act, i.e., blocking inappropriate content from being included in a streaming broadcast. The service server 101 may block at least some of the content information corresponding to the identified user (e.g., host or guest) based on the first information received from the report server 102. Blocking of at least some of the content may be accomplished through various methods, such as blurring or covering the image if the content is an image, to prevent the viewer from being exposed to an inappropriate image that constitutes abuse. If the content is text, blocking may be accomplished by deleting, blurring, or covering the text that constitutes an abuse.

According to an example embodiment, for blocking an abusing act, the user terminal 104 may receive a request from the service server 104 regarding blocking of the content, and then block the content based on the request. Alternatively, the user terminal 104 may determine whether there is an abusing act based on the third information and block the content independently of the service server 104. In this case, the user terminal 104 may correspond to terminals used by other users (e.g., viewers) participating in the broadcast other than the abusing user.

Reporting an abusing act may be understood as reporting an abusing act to the verification server 103. Reporting may be made by the report server 102 providing the second information to the verification server 103 to determine whether the user (e.g., host or guest) corresponding to the abuse is subject to sanctions in detail at the verification server 103.

The first list may include information about a plurality of different thresholds for the same type of abuse. For example, the first list may include a first threshold for determining whether information is subject to blocking and a second threshold for determining whether information is subject to reporting, for the same type of abuse.

The report server 102 may determine whether the second information is subject to blocking based on the first threshold. If the second information is subject to blocking, the report server 102 may provide the service server 101 with the third information. The report server 102 may provide the service server 101 with at least some of the first information and the second information along with the third information.

The report server 102 may determine whether the second information is subject to reporting based on the second threshold. If the second information is subject to reporting, the report server 102 may provide the verification server 103 with the second information (operation 402). Along with the second information, the report server 102 may provide the verification server 103 with at least some of the first information and the third information.

At this time, as a result of the report server 102 determining whether the second information is subject to blocking and reporting based on the first threshold and the second threshold, respectively, the report server 102 may determine that the second information is subject to both blocking and reporting, or it may determine that the second information is subject to blocking but not reporting.

Depending on example embodiments, in addition to at least some of the first information and the third information being directly input to the machine learning model, information processed based on at least some of the first, second, and third information may be used as inputs to the machine learning model.

FIG. 5 is a diagram exemplarily illustrating a first architecture 500 of a system for detecting abusing video information according to an example embodiment.

Referring to FIG. 5, an example of the first architecture 500 for providing a system 100 for detecting abusing video information according to an example embodiment may be disclosed. The system 100 for detecting abusing video information in an Internet broadcast service may be costly due to the generation, transmission, and reception of large amounts of user content, and the use of data resources for processing target content information data and computation required to detect abusing acts. In this case, the faster the speed of the model used to detect abusing video information and the smaller the capacity of the data to be investigated, the lower the required cost tends to be, but higher accuracy tends to increase the cost. Therefore, in the present disclosure, the report server 102, which primarily checks a large amount of content information, checks for abusing acts based on a low-cost, fast model, and the content information that is primarily filtered by the report server 102 may be checked by the verification server 103, so that the verification server 103 may efficiently and accurately check for abusing video information by using a model that guarantees high accuracy even if it is somewhat costly and somewhat slow.

Referring to FIG. 5, the system 100 for detecting abusing video information further includes a data bus 510, the service server 101 which issues information to the data bus 510 when an event (e.g., broadcast transmission, guest video transmission, host video transmission, text information generation and transmission, etc.) related to the broadcast occurs, and the report server 102 which may receive the data by subscribing to the data bus 510. That is, the data bus 510 may repeatedly receive information transmitted from the service server 101, and the report server 102 may obtain at least some of the first information and the second information from the data bus 510.

The data bus 510 may be a component on which data travels. The data traveling on the data bus 510 may include data issued by the service server 101 and such data may be received by a component (or device) such as the report server 102. The data sent to the report server 102 may include at least one or more of user information (e.g., information with sensitive information removed), information about the broadcast, information about the content of the broadcast, user account information, and user identification information. As previously described, the user information may be included in the first information, and the information about the broadcast may be included in the second information. By having the data go through the data bus 510 instead of being transmitted directly from the service server 101 to the report server 102, data loss due to a malfunction of the report server 102 or the like can be avoided.

On the other hand, not every time the information is transmitted from the service server 101 to the data bus 510, the information is transmitted to the report server 102. That is, only some of the information that the report server 102 needs from the service server 101 to the data bus 510 may be transmitted to the report server 102, and the frequency of the transmission may be different than the frequency with which the information is transmitted from the service server 101 to the data bus 510.

Throughout this specification, operations of the report server 102 obtaining information from the service server 101 may be understood to include instances where the report server 102 obtains information transmitted by the service server 101 in an indirect manner, such as where the report server 102 obtains information transmitted by the service server 101 via other components, and the "other components" with respect to the transit is not limited to the data bus 510, as well as when the report server 102 receives information directly from the service server 101.

The report server 102 according to an example embodiment may send a request for at least one of the first information and the second information to the data bus 510. In this case, the request sent to the data bus 510 may include the information of the user (e.g., identification information of the user) associated with the first information.

Referring to FIG. 5, the report server 102 may determine the third information based on the second information received via the data bus 510 or directly from the service server 101, and may transmit data to the service server 101 or the verification server 103 based on the third information. Based on the third information, the report server 102 may provide the verification server 103 with the second information if the second information is subject to reporting. Based on the third information, the report server 102 may provide the service server 101 with the third information if the second information is subject to blocking. If the second information is subject to blocking, the report server 102 may deliver a report, i.e., a request for confirmation of whether the content is subject to sanctions, to the verification server 103, and may provide the service server 101 with a blocking request, i.e., information about the provider (e.g., host or guest) of the content to be blocked and whether blocking is necessary (third information) for immediate blocking of the content to be blocked. Thus, efficient data delivery can be achieved by directly transmitting the necessary data to the service server 101, which performs the blocking function, and the verification server 103, which verifies the reported data, respectively.

Referring to FIG. 5, the report server 102 and the verification server 103 may each deliver a request to the inference server 520 to infer whether the second information is subject to reporting, blocking, or sanctions. The inference server 520 may include one or more machine learning models or artificial neural network models, and the one or more models may be classified into a model for processing the request received from the report server 102 and a model for processing the request received from the verification server 103. By separating the inference server 520 from the report server 102 and the verification server 103, efficiency and freedom in computation and model development are improved. In response to a request received from the report server 102, the inference server 520 may determine whether the second information corresponds to a type of abuse based on a threshold corresponding to the first list, and in response to a request received from the verification server 103, the inference server 520 may determine whether the second information corresponds to an abuse based on a threshold corresponding to the second list. The inference server 520 may use the second information and the information about the first list received from the report server 102 as input data for machine learning. It may also use the third information generated as a result of the inference, or data partially processed from the third information, as input data.

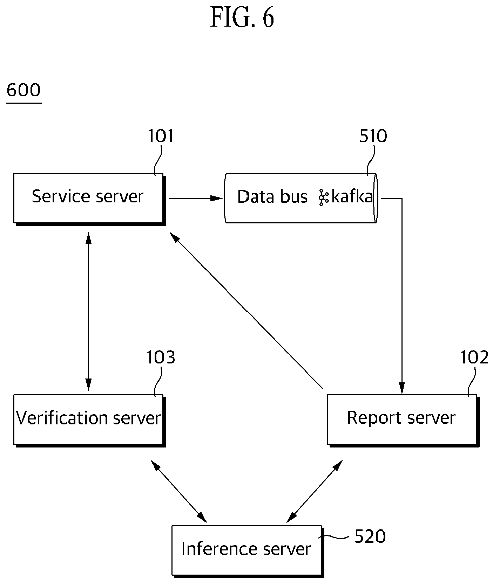

FIG. 6 is a diagram exemplarily illustrating a second architecture of a system for detecting abusing video information according to an example embodiment.

Referring to FIG. 6, in an example of the second architecture 600, the report server 102 may provide the service server 101 with the second information and the third information. The service server 101 may immediately block the content corresponding to abuse based on the third information or provide the verification server 103 with the second information if it is identified as being subject to reporting based on the third information. The verification server 103 may provide the inference server 520 with the second information, request an inference result regarding whether the second information is subject to sanctions, and provide the service server 101 with the information regarding whether the second information is subject to sanctions received from the inference server 520.

As shown in FIG. 6, in the case of the second architecture, the report server 102 may reduce the computational load and increase the throughput rate of the report server 102 in one of various manners. For example, the report server 102 may transmit to the service server 101 merely data regarding whether the second information is subject to blocking, which is determined based on the second information and a threshold corresponding to the type of abuse, without having to determine whether the second information is subject to sanctions. As another example, the report server 102 may provide the service server 101 merely with comparison data of the results of the inference server 520 regarding whether it corresponds to the threshold and the type of abuse.

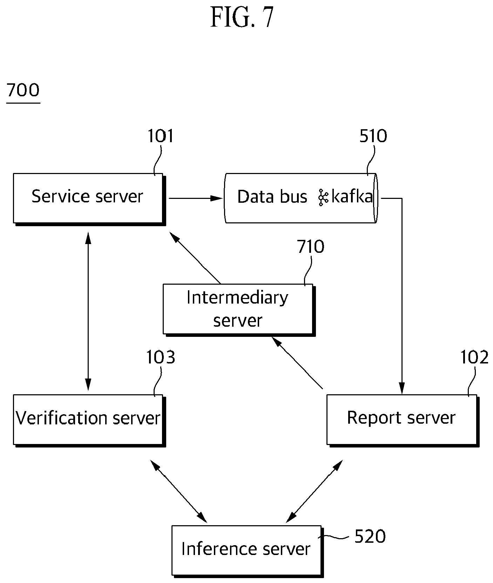

FIG. 7 is a diagram exemplarily illustrating a third architecture of a system for detecting abusing video information according to an example embodiment.

An example of the third architecture 700, described with reference to FIG. 7, may be an example of architecture with some modifications to the second architecture. In this case, the system 100 for detecting abusing video information may further include an intermediary server 710.

The intermediary server 710 may receive data from the report server 102 and provide the data provided to the service server 101, which may ease the strong coupling structure between the service server 101 and the report server 102 and improve the development freedom of the report server 102. In addition, the data flow between the report server 102 and the service server 101 may be made clearer, and the computational load of the service server 101 or the report server 102 may be reduced by isolating sensitive information or by performing a check on whether information is subject to blocking or reporting based on the third information at the intermediary server 710.

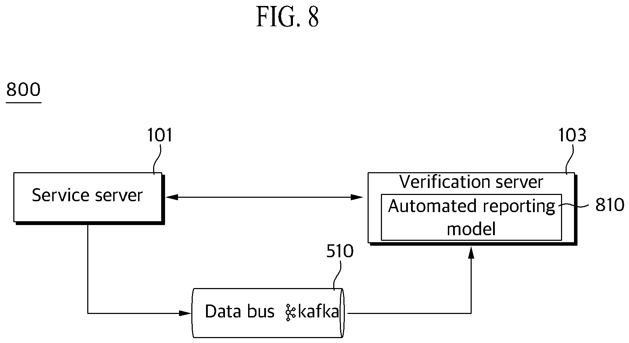

FIG. 8 is a diagram exemplarily illustrating a fourth architecture of a system for detecting abusing video information according to an example embodiment.

In an example of the fourth architecture 800 referenced in FIG. 8, the report server 102 may be included in the verification server 103. The verification server 103 may include an automated reporting model 810 as part of it, allowing it to perform the same operation as the report server 102. The verification server 103 may obtain the second information from the service server 101 via the data bus 510 or directly, and perform primary verification using the automated reporting model 810. That is, the verification server 103 may use the automated reporting model 810 to determine whether the second information is subject to reporting and/or blocking based on the second information, immediately provide the service server 101 with the third information regarding whether the second information is subject to blocking if the second information is subject to blocking, and verify the second information secondarily if the second information is subject to reporting. The secondary verification may be understood as an operation to check the information about whether the second information is subject to sanctions based on the second list. In this case, the degree of freedom of development for each entity of operations may be somewhat reduced, but it is expected to reduce the engineering costs required for development and management and simplify the system configuration.

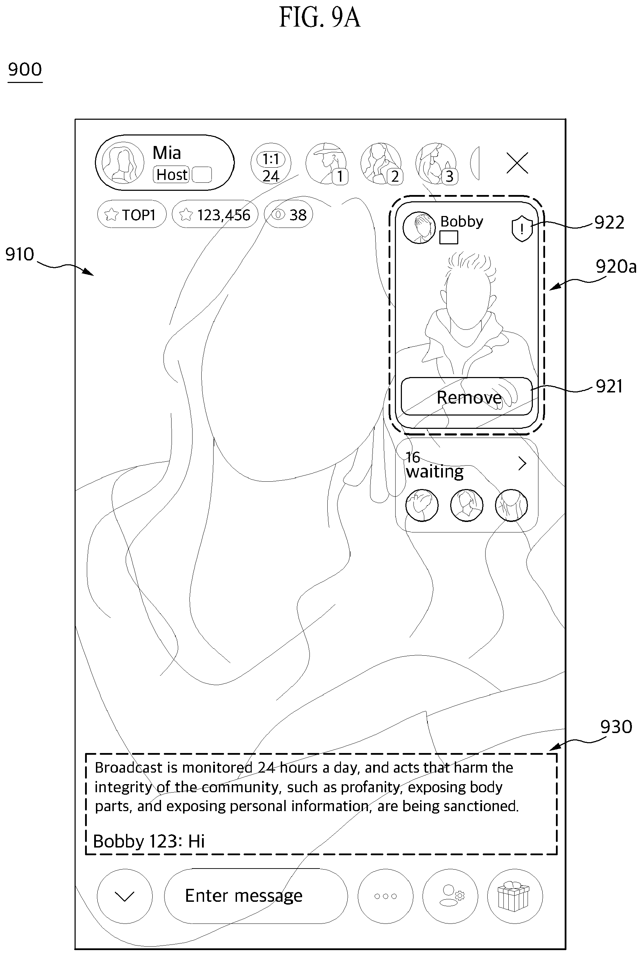

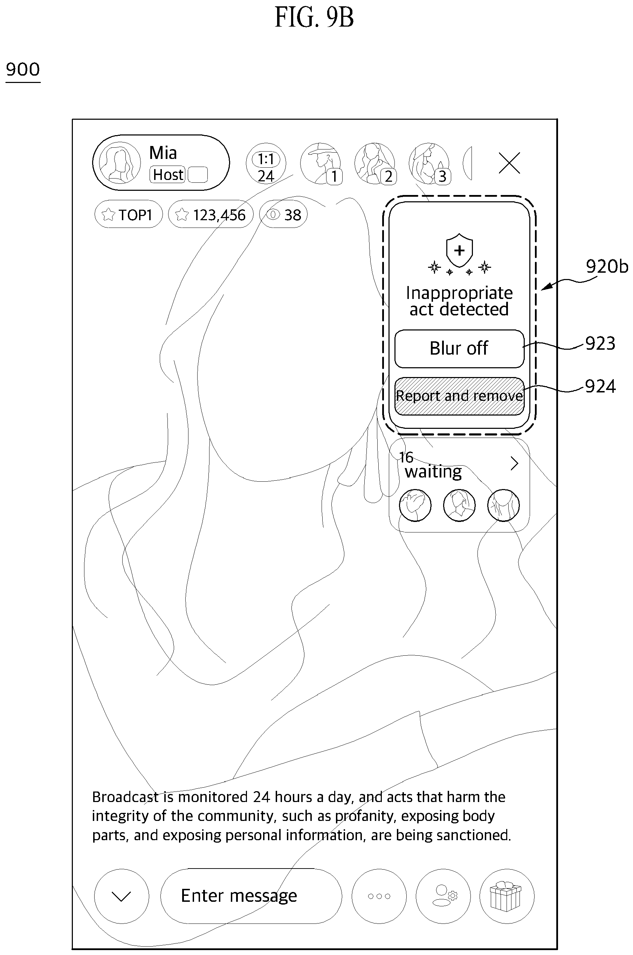

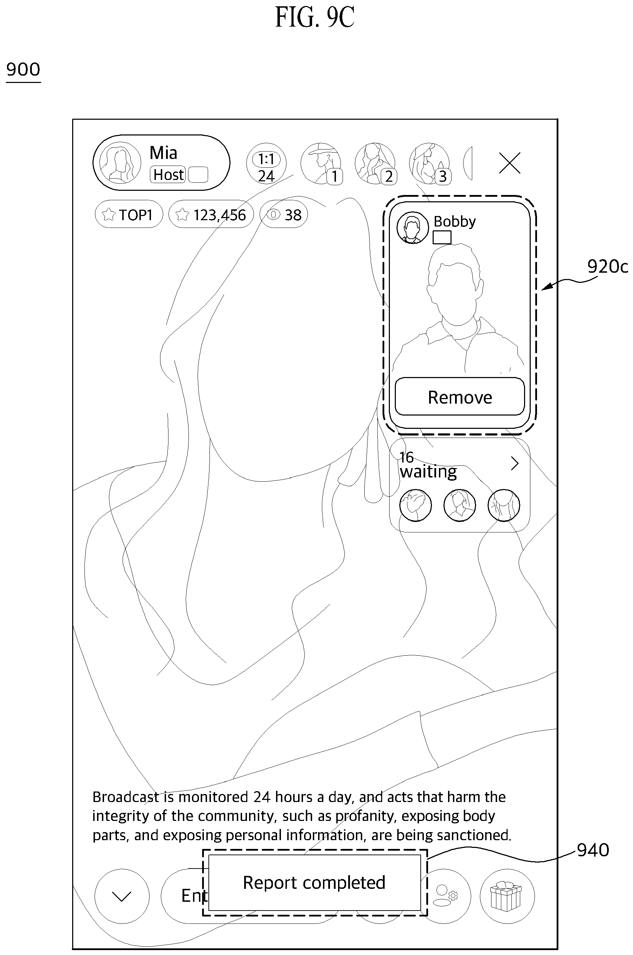

FIGS. 9A, 9B, and 9C are diagrams illustrating pages for providing a broadcast according to an example embodiment.

Referring to FIGS. 9A, 9B, and 9C, a user terminal 104 may provide a user with a first page 900 for providing a broadcast.

According to various example embodiments, the first page 900 may be provided to the user terminal 104 of at least some of the one or more users participating in the broadcast.

According to various example embodiments, the first page 900 may display one or more content about the broadcast being provided. According to an example embodiment, the one or more contents may include content information (e.g., video, image, and/or text information) related to the broadcast provided from the user terminals of at least some of the one or more users participating in the broadcast, including hosts, guests, and viewers of the broadcast. According to an example embodiment, the one or more content may be provided to the user terminal 104 from the service server 101, and the user terminal 104 may display the content provided by the service server 101 on the first page 900.

Referring to FIG. 9A, the first page 900 may include a first region 910 for displaying video or image information of a host, a second region 920a for displaying video or image information of a guest, and a third region 930 for displaying text information (e.g., comments) provided by at least some of the one or more users (e.g., host, guest, and/or viewer) participating in the broadcast. The user terminal 104 may display content related to the broadcast on at least some of the regions of the first region 910, second region 920a, and third region 930 that is determined based on the first information and/or second information obtained from the service server 101. For example, if the user identified based on the first information is a host, the user terminal 104 may determine the first region 910 corresponding to the host and display content (e.g., a video of the host) identified based on the second information on the first region 910.

Referring to FIG. 9A, the second region 920a may include a user interface for sanctions (e.g., sanction icon 921) corresponding to at least some of the users participating in the broadcast. According to an example embodiment, the second region 920a may include an icon 922 that displays a notification regarding at least some of whether content regarding the broadcast is subject to reporting or blocking, or corresponds to a type of abuse, on at least some regions.

Referring to FIG. 9A, based on the second information about the content displayed on the first region 910, second region 920a, or third region 930, the report server 102 may determine whether at least some of the content associated with the broadcast is subject to blocking. If the content is determined to be subject to blocking, the report server 102 may provide a blocking request to the service server 101 or the user terminal 104. The user terminal 104 may receive the blocking request from the report server 102, or may receive the blocking request from the service server 101 that has received the blocking request from the report server 102.

Referring to FIG. 9B, when the user terminal 104 receives a blocking request from the report server 102 or the service server 101, the first page 900 may provide an altered second region 920b. For example, the first page 900 may apply at least some of a blurring, covering, or removing to the content that was displayed in the region corresponding to the blocking request (e.g., the second region) to display it in the altered second region 920b. According to an example embodiment, the altered second region 920b may include an unblocking icon 923 for receiving an unblocking request from a user regarding blocking, and a sanction request icon 924 for receiving a sanction request from a user regarding a user corresponding to the content blocking.

Referring to FIG. 9C, if the user terminal 104 receives an unblocking request from the user, the altered second region 920b may return to the original state of the second region 920c, or if the user terminal receives a sanction request from the user, the second region may be removed from the first page 900.

According to an example embodiment, the user terminal 104 may receive from the service server 101 or the verification server 103 information regarding whether information is subject to sanctions, and it may provide the second region 920c in an unblocked state, i.e., in the original state, or may remove the second region from the first page 900, based on whether information is subject to sanctions.

According to an example embodiment, the user terminal 104 may display a message 940 on the first page 900 indicating that the sanctioning procedure has been completed in response to the user's sanction request.

Example embodiments of the present disclosure have been disclosed in the present specification and drawings. Although specific terms are used, these are only used in general meaning to easily explain the technical content of the present disclosure and to aid understanding of the present disclosure, but not intended to limit the scope of the present disclosure. It is obvious to those skilled in the art that other modified examples based on the technical idea of the present disclosure can be implemented in addition to the example embodiments disclosed herein.

The report server, electronic device or terminal according to the above-described example embodiments may include a processor, a memory for storing and executing program data, a permanent storage such as a disk drive, a communication port for communicating with an external device, a user interface device such as a touch panel, a key, a button, or the like. Methods implemented as software modules or algorithms may be stored on a computer-readable recording medium as computer-readable codes or program instructions executable on the processor. Here, the computer-readable recording medium includes a magnetic storage medium (e.g., ROM (read-only memory), RAM (random-access memory), floppy disk, hard disk, etc.) and optical reading medium (e.g., CD-ROM and DVD (Digital Versatile Disc)). The computer-readable recording medium is distributed over networked computer systems, so that computer-readable codes can be stored and executed in a distributed manner. The medium is readable by a computer, stored in a memory, and executed on a processor.

The present example embodiment can be represented by functional block configurations and various processing steps. These functional blocks may be implemented with various numbers of hardware or/and software configurations that perform specific functions. For example, the example embodiment may employ an integrated circuit configuration such as memory, processing, logic, look-up table, or the like, capable of executing various functions by control of one or more microprocessors or other control devices. Similar to that components can be implemented with software programming or software elements, this example embodiment includes various algorithms implemented with a combination of data structures, processes, routines or other programming components and may be implemented with a programming or scripting language including C, C++, Java, assembler, Python, etc. Functional aspects can be implemented with an algorithm running on one or more processors. In addition, the present example embodiment may employ a conventional technique for at least one of electronic environment setting, signal processing, and data processing. Terms such as "mechanism", "element", "means", and "composition" can be used in a broad sense, and are not limited to mechanical and physical configurations. Those terms may include the meaning of a series of routines of software in connection with a processor or the like.

The above-described example embodiments are merely examples, and other example embodiments may be implemented within the scope of the claims to be described later.

## Claims

1. A computer-implemented method, by an electronic device, for detecting abusing video information, the electronic device comprising a communication part (220), a storage (230) containing an application for detecting abusing video information; and a processor (240) connected to the communication part (220) and the storage (230), the method comprising:
obtaining (301), by the communication part (220) from a service server (101) involved in provision of a broadcast, first information associated with a user participating in the broadcast and second information associated with a content of the broadcast;
determining (302), by the processor (240), based on the second information and a first list of one or more types of abuse, third information about whether the second information corresponds to one of the one or more types of abuse;
based on the third information, providing (303), by the communication part (220) to the service server (101), the second information and the third information; and
based on the third information, providing, by the communication part (220) to a verification server (103) involved in determining whether a reported abuse is subject to sanctions, the first information and the second information.

2. The method of claim 1, wherein the second information comprises one or more of video information and text information received from the user.

3. The method of claim 2, wherein the second information comprises image information corresponding to a frame obtained by sampling the video information based on a specified first cycle.

4. The method of any of the claims 1 to 3, wherein the third information comprises:
type information about the one or more types of abuse; and
one or more of information about whether the second information corresponds to a first type of abuse which is included in the type information and is subject to blocking, and information about whether the second information corresponds to a second type of abuse which is included in the type information and is subject to reporting.

5. The method of claim 4, wherein:
providing the service server (101) with the first information, the second information and the third information comprises providing, based on the information about whether the second information is subject to blocking, the service server (101) with the first information, the second information and the third information; and
providing the verification server (103) with the first information and the second information comprises providing, based on the information about whether the second information is subject to reporting, the verification server (103) with the second information.

6. The method of claim 4 or 5, wherein the first list comprises a first threshold for determining whether information is subject to blocking and a second threshold for determining whether information is subject to reporting, and
determining the third information comprises:
determining, based on the first threshold, whether the second information is subject to blocking; and
determining, based on the second threshold, whether the second information is subject to reporting.

7. The method of any of the claims 1 to 6, wherein the first list comprises type information regarding the one or more types of abuse and threshold information corresponding to each of the one or more types of abuse, and
determining the third information comprises determining, based on the second information and the threshold information, the third information.

8. The method of any of the claims 1 to 7, wherein at least some of the content corresponding to a user identified based on the first information is blocked based on the second information and the third information.

9. The method of any of the claims 1 to 8, wherein information about whether the second information is subject to sanctions, is determined based on the second information and a second list including one or more types of abuse, and
the information about whether the second information is subject to sanctions is provided to the service server (101).

10. The method of claim 9, wherein the first list comprises at least some of the one or more types of abuse included in the second list, and
a threshold corresponding to the one or more types of abuse included in the first list and a threshold corresponding to the one or more types of abuse included in the second list are different from each other.

11. The method of any of the claims 1 to 10, wherein providing the service server (101) with the first information, the second information and the third information comprises providing an intermediary server (710) that mediates data between the electronic device and the service server (101) with the first information, the second information and the third information.

12. A computer-implemented method, by an electronic device, for detecting abusing video information, the electronic device comprising a communication part (220), a storage (230) containing an application for detecting abusing video information; and a processor (240) connected to the communication part (220) and the storage (230), the method comprising:
obtaining, by the communication part (220) from a service server (101) involved in provision of a broadcast, first information associated with a user participating in the broadcast and second information associated with a content of the broadcast;
determining, by the processor (240), based on the second information and a first list of one or more types of abuse, third information about whether the second information corresponds to one of the one or more types of abuse; and
based on the third information, providing, by the communication part (220) to the service server (101), the second information and the third information, wherein
the service server (101) blocks, based on the second information and the third information, at least some content corresponding to a guest identified based on the first information in the service server (101), and
provides, based on the third information, a verification server (103) involved in determining whether a reported abuse is subject to sanctions, with the first information and the second information.

13. An electronic device for detecting abusing video information, the electronic device comprising:
a communication part (220);
a storage (230) containing an application for detecting abusing video information; and
a processor (240), wherein the processor (240) is connected to the communication part (220) and the storage (230), and is configured to:
obtain, from a service server (101) involved in provision of a broadcast, first information associated with a user participating in the broadcast and second information associated with a content of the broadcast;
determine, based on the second information and a first list of one or more types of abuse, third information about whether the second information corresponds to one of the one or more types of abuse;
based on the third information, provide, to the service server (101), the second information and the third information; and
based on the third information, provide, to a verification server (103) involved in determining whether a reported abuse is subject to sanctions, the first information and the second information.

14. The electronic device of claim 13, wherein the second information comprises one or more of video information and text information received from the user.

15. The electronic device of claim 13 or 14, wherein the third information comprises:
type information about the one or more types of abuse; and
one or more of information about whether the second information corresponds to a first type of abuse which is included in the type information and is subject to blocking, and information about whether the second information corresponds to a second type of abuse which is included in the type information and is subject to reporting.

16. The electronic device of any of the claims 13 to 15, wherein the first list comprises type information regarding the one or more types of abuse and threshold information corresponding to each of the one or more types of abuse, and
the processor is further configured to determine the third information based on the second information and the threshold information.

17. A computer-implemented method of an electronic device for providing information, the information providing method comprising:
obtaining, from a service server (101) involved in provision of a broadcast, first information associated with a user participating in the broadcast and second information associated with a content of the broadcast;
displaying, based on the second information, the content of the broadcast on at least a partial region of a first page for providing the broadcast;
identifying a blocking request for at least some of the content of the broadcast;
identifying a user corresponding to the first information included in the blocking request;
blocking at least some of the content corresponding to the identified user among the content of the broadcast; and
providing, in response to the blocking, a user interface on the first page for requesting a report or sanctions against the user corresponding to the first information, wherein
the blocking request is generated based on the second information and third information about whether the second information corresponds to one of the one or more types of abuse, and
the first information, the second information and the third information are provided to the service server (101) based on the third information determined based on a first list of one or more types of abuse and the second information.

18. The information-providing method of claim 17, wherein it is determined, based on the second information and a second list including one or more types of abuse, whether the second information is subject to sanctions, and
the information-providing method further comprises unblocking the at least some of the content that is blocked or performing a sanctioning procedure against the user, based on whether the second information is subject to the sanctions.

19. A system for detecting abusing video information, the system comprising:
a service server (101) configured to provide a broadcast service;
a verification server (103) involved in determining whether a reported abuse is subject to sanctions; and
an electronic device (102), wherein the electronic device (102) is configured to:
obtain from the service server (101), first information associated with a user participating in a broadcast in which streaming is in progress and second information associated with a content received from the user;
determine, based on the second information and a first list of one or more types of abuse, third information about whether the second information corresponds to one of the one or more types of abuse;
based on the third information, provide, to the service server (101), the second information and the third information; and
based on the third information, provide, to the verification server (102), the first information and the second information.
